(19) Europäisches Patentamt
European Patent Office
Office européen des brevets

(11) **EP 4 722 681 A1**

(12) **EUROPEAN PATENT APPLICATION**
published in accordance with Art. 153(4) EPC

(43) Date of publication:
**08.04.2026 Bulletin 2026/15**

(21) Application number: **24815019.5**

(22) Date of filing: **18.04.2024**

(51) International Patent Classification (IPC):
*G01M 13/04* (2019.01)

(52) Cooperative Patent Classification (CPC):
G01M 13/04

(86) International application number:
**PCT/JP2024/015375**

(87) International publication number:
**WO 2024/247532 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 JP 2023089546**

(71) Applicant: **NSK LTD.**
**Tokyo 141-8560 (JP)**

(72) Inventors:
• **TAGUCHI, Keiichiro**
**Fujisawa-shi, Kanagawa 251-8501 (JP)**
• **NISHIZAWA, Kazuto**
**Fujisawa-shi, Kanagawa 251-8501 (JP)**
• **SUZUKI, Akihiro**
**Fujisawa-shi, Kanagawa 251-8501 (JP)**
• **ZHOU, Kang**
**Fujisawa-shi, Kanagawa 251-8501 (JP)**
• **ABE, Keigo**
**Fujisawa-shi, Kanagawa 251-8501 (JP)**
• **HIRAMOTO, Akihide**
**Fujisawa-shi, Kanagawa 251-8501 (JP)**

(74) Representative: **Grünecker Patent- und Rechtsanwälte**
**PartG mbB**
**Leopoldstraße 4**
**80802 München (DE)**

(54) **BEARING REMAINING LIFE DIAGNOSIS METHOD AND BEARING REMAINING LIFE DIAGNOSIS DEVICE**

(57)    A remaining life of a bearing is appropriately predicted. A bearing remaining life diagnosis method for predicting a remaining life of a rolling bearing used in a rotary machine and having inner and outer bearing rings and rolling elements between both the bearing rings includes a step of calculating a latest estimated peeling length, and a step of calculating a latest remaining life of the bearing based on a latest peeling length of the bear-ing ring. The step of calculating the latest estimated peeling length includes a step of calculating a maximum rolling element load, a step of calculating a maximum contact surface pressure from the maximum rolling element load, and a step of calculating the latest estimated peeling length of the bearing ring from the maximum contact surface pressure of the bearing ring.

EP 4 722 681 A1

# FIG.5

START

S10
DOES PARAMETER RELATED TO BEARING DETERIORATION FALL WITHIN PREDETERMINED RANGE?

YES

NO

S21
IS THERE ACTUALLY-MEASURED INITIAL PEELING LENGTH DATA?

NO

S22
DETERMINE ESTIMATED INITIAL PEELING LENGTH

YES

S31
IS PEELING LENGTH LESS THAN THRESHOLD VALUE?

NO

YES

S32
CALCULATE REMAINING LIFE

S40
HAS PREDETERMINED PERIOD ELAPSED FROM PREVIOUS REMAINING LIFE CALCULATION?

NO

YES

S51
IS THERE ACTUALLY-MEASURED PEELING LENGTH DATA?

NO

S52
CALCULATE MAXIMUM ROLLING ELEMENT LOAD

S53
CALCULATE MAXIMUM CONTACT SURFACE PRESSURE

S54
CALCULATE ESTIMATED PEELING LENGTH

YES

S61
IS PEELING LENGTH LESS THAN THRESHOLD VALUE?

YES

S62
CALCULATE REMAINING LIFE

NO

END

**Description**

Field

The present invention relates to a bearing remaining life diagnosis method and a bearing remaining life diagnosis device.

Background

Patent Literature 1 describes a method for predicting and analyzing development of peeling of a rolling bearing by calculating a rolling element load in consideration of a peeling shape of the rolling bearing.

Citation List

Patent Literature

Patent Literature 1: Japanese Patent No. 6844764

Summary

Technical Problem

In a calculation process for obtaining a remaining life described in Patent Literature 1, there is a possibility that prediction of the remaining life is not appropriate because an operating state of mechanical equipment is not considered.
In view of the above problem, an object of the present invention is to appropriately predict a remaining life of a bearing.

Solution to Problem

A bearing remaining life diagnosis method according to an embodiment of the present disclosure for predicting a remaining life of a rolling bearing used in a rotary machine and having inner and outer bearing rings and rolling elements between both the bearing rings includes a step of calculating an estimated peeling length which is an estimated value of a peeling length of the bearing ring; and a step of calculating the remaining life of the bearing based on the estimated peeling length and prediction of an operation status of the rotary machine, wherein the step of calculating the estimated peeling length includes a step of calculating a maximum rolling element load from actually measured data, a step of calculating a maximum contact surface pressure from the maximum rolling element load, and a step of calculating the estimated peeling length of the bearing ring from the maximum contact surface pressure of the bearing ring.
A bearing remaining life diagnosis device according to an embodiment of the present disclosure for predicting a remaining life of a rolling bearing used in a rotary machine and having inner and outer bearing rings and rolling elements between both the bearing rings comprises a peeling length acquisition unit configured to calculate an estimated peeling length which is an estimated value of a peeling length of the bearing ring; and a remaining life calculation unit configured to calculate the remaining life of the bearing based on the estimated peeling length of the bearing ring and prediction of an operation status of the rotary machine, wherein the peeling length acquisition unit includes a maximum rolling element load calculation unit configured to calculate a maximum rolling element load from actually measured data, a maximum contact surface pressure calculation unit configured to calculate a maximum contact surface pressure from the maximum rolling element load, and an estimated peeling length calculation unit configured to calculate the estimated peeling length of the bearing ring from the maximum contact surface pressure of the bearing ring.

Advantageous Effects of Invention

According to the present invention, a remaining life of a rolling bearing can be appropriately predicted.

Brief Description of Drawings

FIG. 1 is a schematic configuration diagram illustrating an example of an overall configuration of a rotary machine and a bearing remaining life diagnosis system according to a first embodiment.

FIG. 2 is a schematic structural diagram of a wind power generator.

FIG. 3 is a schematic cross-sectional diagram of a bearing according to the first embodiment.

FIG. 4 is a block diagram of a bearing remaining life diagnosis device according to the first embodiment.

FIG. 5 is a flowchart of a bearing remaining life diagnosis method according to the first embodiment.

FIG. 6 is a diagram illustrating an example of a graph indicating a transition of an output of a power generator.

FIG. 7 is a diagram illustrating an example of a graph indicating a transition of a rotation speed of the power generator.

FIG. 8 is a diagram illustrating an example of a graph indicating a relationship between an output and a maximum rolling element load.

FIG. 9 is a diagram illustrating an example of a graph indicating prediction of progress of a peeling length.

FIG. 10 is a schematic diagram illustrating a maximum rolling element load $Q_{max}$ received from a rolling element immediately after the rolling element passes through peeling in a state where a load P is applied to the bearing.

FIG. 11 is a schematic diagram illustrating a maximum rolling element load $Q_{max}$ received from the rolling element immediately after the rolling element passes through peeling in the state where the load P is applied to the bearing.

FIG. 12 is a diagram for describing a relationship between a peeling length and an operating time.

FIG. 13 is a diagram for describing a bearing remaining life diagnosis method according to a second embodiment.

FIG. 14 is a diagram illustrating an example of a graph indicating a relationship between physical quantities measured by sensors and a rolling element load.

FIG. 15 is a plan diagram for describing a bearing remaining life diagnosis method according to a third embodiment.

FIG. 16 is a diagram illustrating an example of a graph indicating a relationship between a wind speed and a maximum rolling element load.

FIG. 17 is a diagram illustrating an example of a graph indicating a relationship between a physical quantity related to vibration and a maximum rolling element load.

FIG. 18 is a diagram for describing an example of a method for estimating a load ratio e.

FIG. 19 is a diagram for describing a different example of the method for estimating the load ratio e.

FIG. 20 is a diagram for describing an example of a method for estimating a load factor $\varepsilon$.

Description of Embodiments

Hereinafter, modes for carrying out the invention (hereinafter, embodiments) will be described in detail with reference to the drawings. Note that the present invention is not limited by the following embodiments. In addition, constituent elements in the following embodiments include those that can be easily assumed by those skilled in the art, those that are substantially the same, and those within a so-called equivalent range. Furthermore, the components disclosed in the following embodiments can be appropriately combined.

(First Embodiment)

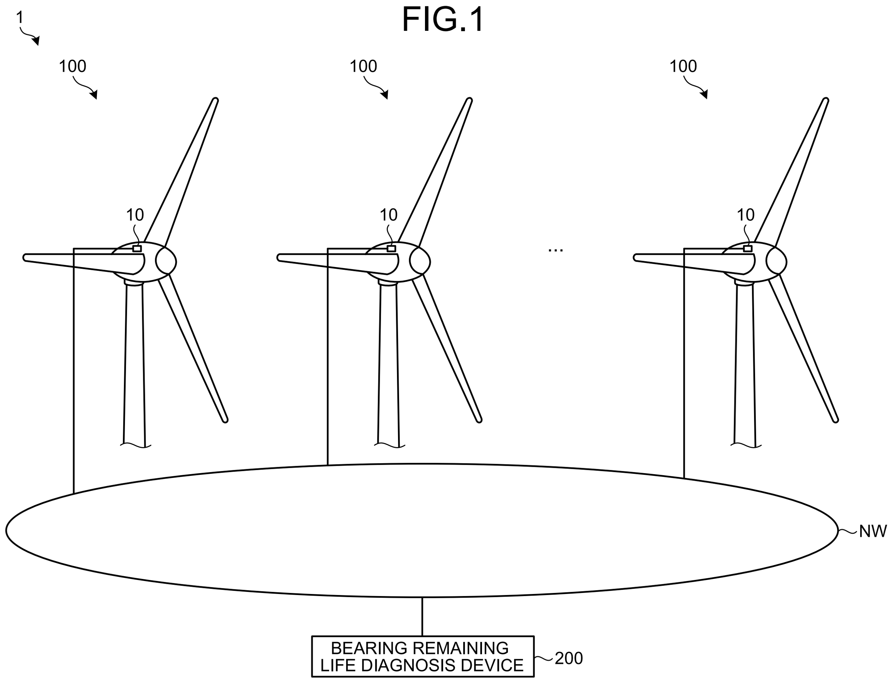

FIG. 1 is a schematic configuration diagram illustrating an example of an overall configuration of a rotary machine and a bearing remaining life diagnosis system according to a first embodiment. In the first embodiment, a wind power generator 100 is exemplified as an example of the rotary machine, but the present invention is not limited thereto, and can be applied to other rotary machines.

(Rotary Machine)

A bearing remaining life diagnosis system 1 for a rotary machine according to the embodiment includes a detection device 10 provided in each of the wind power generators 100 in a collective wind power plant in which a plurality of wind power generators 100 are provided on the ground or on the sea, for example, and a bearing remaining life diagnosis device 200 provided in the collective wind power plant or an external management facility, for example.

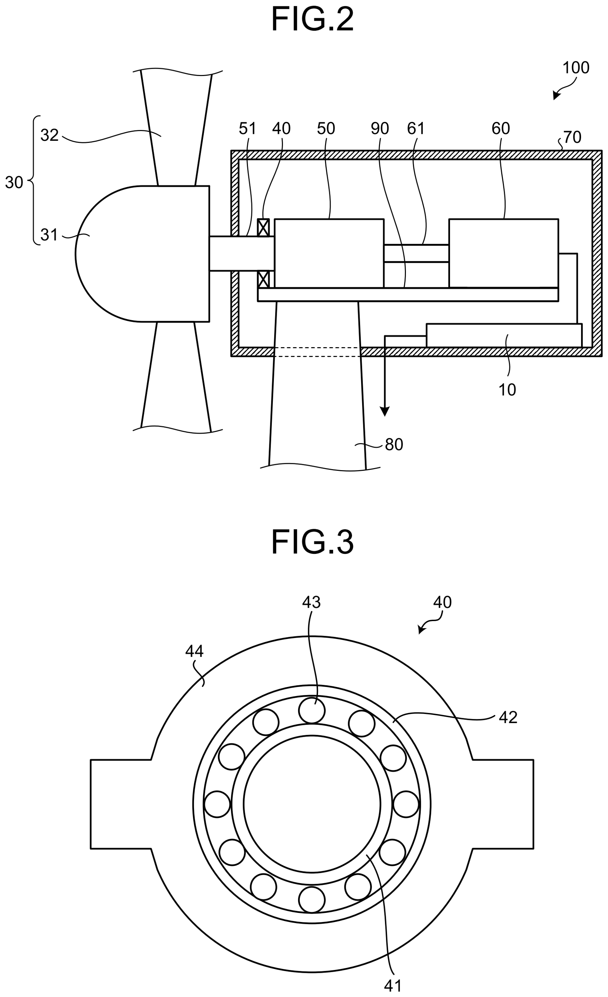

FIG. 2 is a schematic structural diagram of the wind power generator. The wind power generator 100 includes the detection device 10, a rotor 30, a bearing 40, a speed-up gear 50, and a power generator 60. The detection device 10, the bearing 40, the speed-up gear 50, and the power generator 60 are stored in a nacelle 70. The speed-up gear 50 and the power generator 60 are placed on a base (frame) 90 supported by a tower 80.

The rotor 30 includes a hub 31 and a plurality of blades 32 provided on the hub 31. The hub 31 is coupled to the speed-up gear 50 via a main shaft 51 and is rotatably supported by the bearing 40. The main shaft 51 transmits, to the speed-up gear 50, rotational torque generated when the rotor 30 rotates by the blades 32 receiving wind power.

FIG. 3 is a schematic cross-sectional diagram of the bearing according to the first embodiment. The rolling bearing 40 has an inner ring 41 externally fitted to the main shaft 51, an outer ring 42 internally fitted to a housing 44 and the like, a plurality of rolling elements 43 rollably arranged between the inner ring 41 and the outer ring 42, and a retainer (not illustrated) that rollably holds the rolling elements 43. In the first embodiment, the rolling elements 43 and a raceway surface of the inner ring 41 come into line contact with each other, so that peeling of the inner ring 41 occurs. Hereinafter, a direction along a circumference of the inner ring 41 may be simply described as a circumferential direction, a direction parallel to a rotation axis of the inner ring 41 may be simply described as an axial direction, and a direction orthogonal to the axial direction and directed outward from the rotation axis of the inner ring 41 may be simply described as a radial direction.

The speed-up gear 50 is provided between the main shaft 51 and the power generator 60. The speed-up gear 50 includes, for example, a gear speed-up mechanism including a planetary gear, an intermediate shaft, a high-speed shaft, and the like provided in a gear box.

The speed-up gear 50 increases a rotation speed of the main shaft 51 and outputs increased rotational torque to the power generator 60 via a rotatably supported power generator shaft 61. Although not particularly illustrated, a plurality of bearings for rotatably supporting a plurality of shafts are provided in the speed-up gear 50. Lubricating oil for oil-bath lubricating the gear speed-up mechanism is stored in the gear box of the speed-up gear 50.

The power generator 60 generates power by the rotational torque received from the speed-up gear 50 via the power generator shaft 61. The power generator 60 is configured by, for example, an induction power generator or a synchronous power generator. Note that in a case where the power generator 60 is a synchronous power generator that can be operated at a variable speed, the speed-up gear 50 may not be provided.

The detection device 10 collects various data such as a state of the bearing 40 and an operation status of the wind power generator 100. In the first embodiment, the detection device 10 collects data in which the output of the power generator 60 is associated with a time. As illustrated in FIG. 1, the detection device 10 outputs data collected by a data collection unit 11 to the bearing remaining life diagnosis device 200 via a network NW. The network NW may be, for example, an Internet line or a local area network (LAN). Further, the wind power generators 100 in the collective wind power plant may be coupled by the LAN, and a virtual private network (VPN) may be established between the wind power generators 100 and the LAN of the external management facility in which the bearing remaining life diagnosis device 200 is provided.

(Bearing Remaining Life Diagnosis Device)

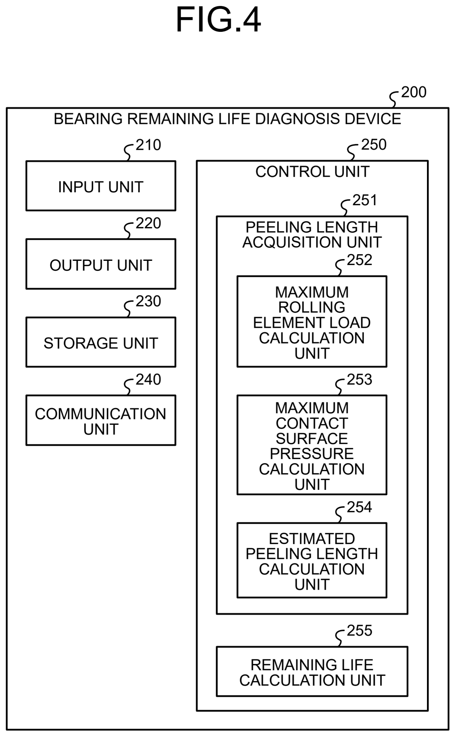

FIG. 4 is a block diagram of the bearing remaining life diagnosis device according to the first embodiment. It can be said that the bearing remaining life diagnosis device 200 is a computer that transmits and receives information to and from the detection device 10. For example, the bearing remaining life diagnosis device 200 is a computer including an arithmetic device including an arithmetic circuit such as a central processing unit (CPU) and a storage unit 230, and executes processing by reading and executing a program (software) from the storage unit 230. As illustrated in FIG. 4, the bearing remaining life diagnosis device 200 has an input unit 210, a communication unit 240, a storage unit 230, an output unit 220, and a control unit 250.

The input unit 210 receives an input with respect to the bearing remaining life diagnosis device 200. The input unit 210 is realized by, for example, an input device such as a keyboard, a mouse, or a touch panel. The input unit 210 is not an essential component in a case where the processing is automatically performed.

The communication unit 240 is a communication module that communicates with an external device, and is, for example, an antenna, a cable, or the like. The communication unit 240 may communicate with an external device such as the detection device 10 by an arbitrary communication method.

The storage unit 230 is a memory that stores various types of information such as arithmetic contents and programs of the control unit 250, and includes, for example, at least one of a main storage device such as a random access memory (RAM) and a read only memory (ROM), and an external storage device such as a hard disk drive (HDD) and a solid state drive (SSD). The program for the control unit 250 stored in the storage unit 230 may be stored in a recording medium readable by the bearing remaining life diagnosis device 200.

The output unit 220 outputs various types of information including a remaining life calculated by the bearing remaining life diagnosis device 200. The output unit 220 may be at least one of a display that outputs an image and a speaker that outputs sound.

The control unit 250 is an arithmetic device, and includes, for example, an arithmetic circuit such as a CPU. The control unit 250 includes a peeling length acquisition unit 251 and a remaining life calculation unit 255. The peeling length acquisition unit 251 includes a maximum rolling element load calculation unit 252, a maximum contact surface pressure calculation unit 253, and an estimated peeling length calculation unit 254. The control unit 250 reads and executes a program (software) from the storage unit 230 to realize the peeling length acquisition unit 251 and the remaining life calculation unit 255, and executes processing thereof. At least a part of the processing of the peeling length acquisition unit 251 and the remaining life calculation unit 255 may be realized by a hardware circuit. Note that the control unit 250 may execute these processing by one CPU, or may include a plurality of CPUs and execute the processing by the plurality of CPUs. Processing performed by the peeling length acquisition unit 251, the maximum rolling element load calculation unit 252, the maximum contact surface pressure calculation unit 253, the estimated peeling length calculation unit 254, and the remaining life calculation unit 255 will be described in the description of the bearing remaining life diagnosis method to be described later.

(Bearing Remaining Life Diagnosis Method)

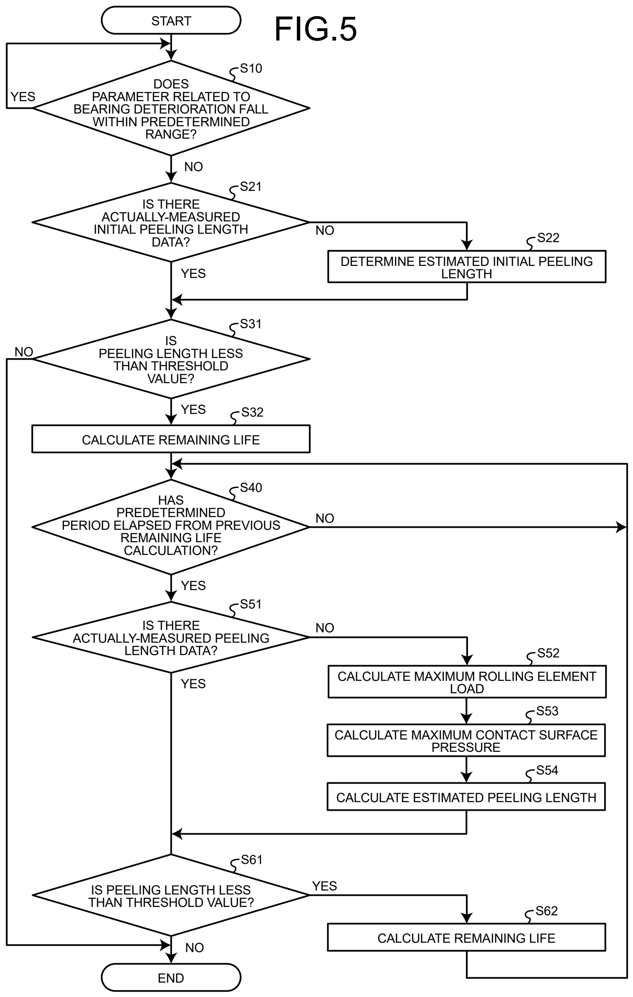

FIG. 5 is a flowchart of a bearing remaining life diagnosis method according to the first embodiment. Hereinafter, along the flow illustrated in FIG. 5, the bearing remaining life diagnosis method according to the first embodiment will be described in detail by using the bearing 40 used in the speed-up gear 50 as an example. In the following description, peeling of the inner ring 41 will be simply described as peeling. In addition, a maximum circumferential length of the peeling of the inner ring 41 will be simply described as a peeling length.

Bearing remaining life diagnosis is started by starting monitoring of a parameter related to bearing deterioration. Here, the bearing remaining life diagnosis system 1 may be applied at the same time as the bearing 40 is newly introduced into the rotary machine, or may be applied to the bearing 40 already in operation.

After starting the diagnosis, the detection device 10 acquires the parameter related to the bearing deterioration for each predetermined period and transmits the parameter to the bearing remaining life diagnosis device 200. The control unit 250 acquires the parameter related to the bearing deterioration and determines whether the parameter related to the bearing deterioration falls within a predetermined range (step S10). Here, the parameter related to the bearing deterioration can be, for example, a parameter that changes when peeling occurs in the inner ring 41, such as a physical quantity related to vibration of the bearing 40, a degree of deterioration of a lubricant, and an amount of metal adhering to a filter of the lubricant. The physical quantity related to vibration refers to at least one of an amplitude and a frequency of vibration among a displacement, a speed, and an acceleration associated with vibration of a measurement target. Accordingly, the presence or absence of peeling can be detected by monitoring the parameter related to the bearing deterioration. When the parameter related to the bearing deterioration is within the predetermined range (step S10: Yes), the control unit 250 acquires the parameter related to the bearing deterioration again after a predetermined period, and determines again whether the parameter related to the bearing deterioration is within the predetermined range (step S10).

(Acquisition of Initial Peeling Length)

When the parameter related to the bearing deterioration is not within the predetermined range (step S10: No), the peeling length acquisition unit 251 determines whether actually-measured initial peeling length data is stored in the storage unit 230 (step S21).

When the actually-measured initial peeling length data is stored in the storage unit 230 (step S21: Yes), the peeling length acquisition unit 251 acquires the data of the actually-measured initial peeling length stored in the storage unit 230 as an initial peeling length $A_0$. The actually-measured initial peeling length is an actually measured value of the initial peeling length obtained by directly measuring the inner ring 41 with a fiberscope or the like.

On the other hand, when the data of the actually-measured initial peeling length is not stored in the storage unit 230 (step S21: No), the peeling length acquisition unit 251 determines an estimated initial peeling length (step S22), and acquires the determined estimated initial peeling length as the initial peeling length $A_0$. Here, the initial peeling length $A_0$ refers to a peeling length acquired only after the start of the bearing remaining life diagnosis. When the bearing remaining life diagnosis system 1 is applied simultaneously with the new installation of the rotary machine, the peeling length acquisition unit 251 may determine the estimated initial peeling length to be 0.

After acquiring the initial peeling length $A_0$, the remaining life calculation unit 255 determines whether the initial peeling length $A_0$ is less than a threshold value $A_{lim}$ (step S31). The threshold value $A_{lim}$ will be described later.

When the initial peeling length $A_0$ is less than the threshold value $A_{lim}$ (step S31: Yes), the remaining life calculation unit 255 predicts a future peeling length from prediction of a future operation status of the rotary machine, and calculates a remaining life from prediction of the peeling length (step S32). The operation status of the rotary machine is predicted from an operation record and the like of the same period of a previous year. The remaining life refers to a time from a time point when a latest peeling length is acquired until the peeling length is predicted to reach the threshold value $A_{lim}$. The remaining life calculation unit 255 outputs data including the calculated remaining life via the output unit 220 or the communication unit 240.

On the other hand, when the initial peeling length $A_0$ is the threshold value $A_{lim}$ or more (step S31: No), the control unit 250 outputs information indicating that there is no remaining life of the bearing 40 via the output unit 220 or the communication unit 240 without calculating the remaining life. In this case, the bearing remaining life diagnosis device 200 ends the bearing remaining life diagnosis.

The peeling length acquisition unit 251 determines whether a predetermined period has elapsed from the previous remaining life calculation (step S40). Here, when the predetermined period has not elapsed from the previous remaining life calculation (step S40: No), the latest peeling length is not acquired. On the other hand, when the predetermined period has elapsed from the previous remaining life calculation (step S40: Yes), the peeling length acquisition unit 251 determines whether data of a latest actually-measured peeling length is stored in the storage unit 230 (step S51).

When the data of the latest actually-measured peeling length is stored in the storage unit 230 (step S51: Yes), the peeling length acquisition unit 251 acquires the data of the latest actually-measured peeling length stored in the storage unit 230 as a peeling length $A_n$. The peeling length $A_n$ refers to a peeling length acquired at (n + 1)-th time after starting the bearing remaining life diagnosis. Here, n is an integer of 1 or more.

On the other hand, when the data of the latest actually-measured initial peeling length is not stored in the storage unit 230 (step S51: No), the peeling length acquisition unit 251 calculates an estimated peeling length by the maximum rolling element load calculation unit 252, the maximum contact surface pressure calculation unit 253, and the estimated peeling length calculation unit 254 (steps S52 to S54), and acquires the calculated estimated peeling length as the latest peeling length $A_n$.

(Estimation of Peeling Length)

Hereinafter, a method for calculating the estimated peeling length will be described in detail by using the bearing 40 used in the speed-up gear 50 in the first embodiment as an example. In the first embodiment, the estimated peeling length $A_n$ is calculated from the output of the power generator 60. More specifically, operation data of the power generator 60 is acquired, an operation status of the power generator 60 is classified into sections, a maximum rolling element load is calculated for each section (step S52), a maximum contact surface pressure is calculated from the maximum rolling element load (step S53), and an estimated peeling length is calculated from the maximum contact surface pressure (step S54).

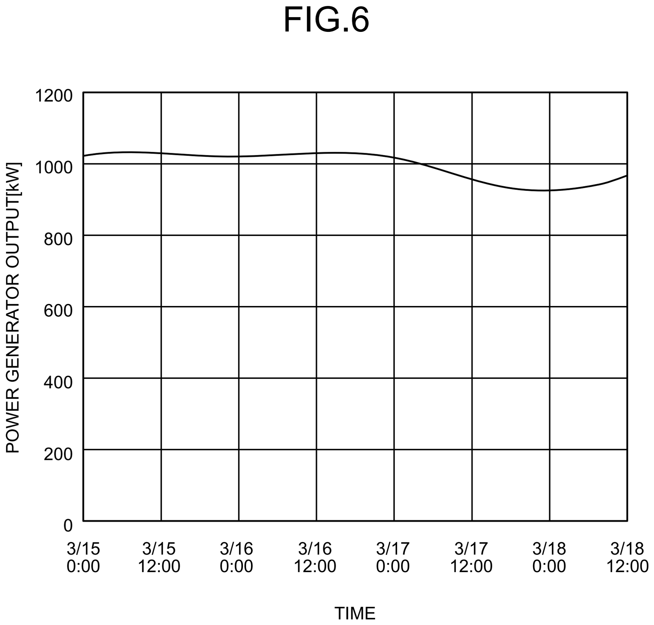

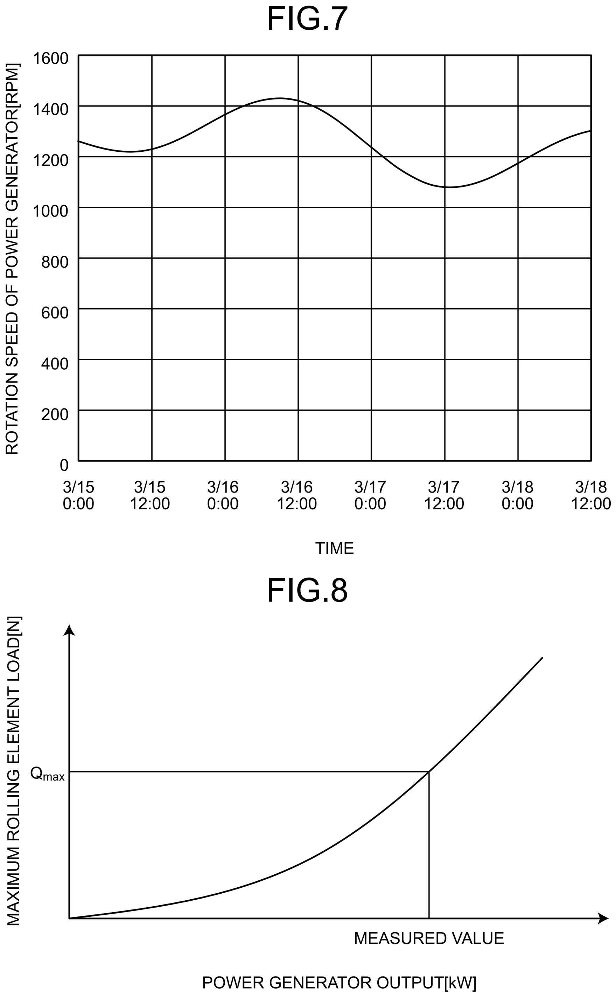

FIG. 6 is a diagram illustrating an example of a graph indicating a transition of the output of the power generator. FIG. 7 is a diagram illustrating an example of a graph indicating a transition of a rotation speed of the power generator. The detection device 10 collects data (operation data of the power generator 60) of the output and the rotation speed of the power generator 60 associated with the time illustrated in FIGS. 6 and 7, and transmits the data to the bearing remaining life diagnosis device 200. The peeling length acquisition unit 251 acquires the operation data of the power generator 60 via the communication unit 240. Note that the data in FIGS. 6 and 7 is schematic data for describing the embodiment, and is not actual data.

Table 1 is a table obtained by aggregating data according to FIGS. 6 and 7. As indicated in Table 1, the peeling length acquisition unit 251 generates data obtained by aggregating the operating time for each output operation status from the operation data of the power generator 60. Specifically, as indicated in Table 1, the peeling length acquisition unit 251 sets sections for each output range and rotation speed range of the power generator 60, and aggregates the operating time for each section in the period after the previous remaining life is calculated.

Table 1

| Output [kW] | Rotation speed [RPM] | Operating time [min.] | Stress repetition number N | Maximum rolling element load $Q_{max}$ [kN] | Peeling progression amount $a_i$ for each section [mm] |
|---|---|---|---|---|---|
| 920 to 940 | 1000 to 1100 | 155 | 7750 | 46 | 0.017825 |
| 920 to 940 | 1100 to 1200 | 480 | 26400 | 46 | 0.06072 |
| 920 to 940 | 1200 to 1300 | 190 | 11400 | 46 | 0.02622 |
| 940 to 960 | 1000 to 1100 | 245 | 12250 | 47 | 0.0287875 |
| 940 to 960 | 1200 to 1300 | 245 | 14700 | 47 | 0.034545 |
| 960 to 980 | 1000 to 1100 | 205 | 10250 | 48 | 0.0246 |
| 960 to 980 | 1200 to 1300 | 105 | 6300 | 48 | 0.01512 |
| 980 to 1000 | 1000 to 1100 | 10 | 500 | 49 | 0.001225 |
| 980 to 1000 | 1100 to 1200 | 205 | 11275 | 49 | 0.02762375 |
| 1000 to 1020 | 1100 to 1200 | 185 | 10175 | 50 | 0.0254375 |
| 1000 to 1020 | 1200 to 1300 | 70 | 4200 | 50 | 0.0105 |
| 1020 to 1040 | 1200 to 1300 | 1420 | 85200 | 51 | 0.21726 |
| 1020 to 1040 | 1300 to 1400 | 870 | 56550 | 51 | 0.1442025 |
| 1020 to 1040 | 1400 to 1500 | 615 | 43050 | 51 | 0.1097775 |

(continued)

| Output [kW] | Rotation speed [RPM] | Operating time [min.] | Stress repetition number N | Maximum rolling element load $Q_{max}$ [kN] | Peeling progression amount $a_i$ for each section [mm] |
|---|---|---|---|---|---|
| | | | | Peeling progression amount $\Sigma a_i$ | 0.74384375 |

FIG. 8 is a diagram illustrating an example of a graph indicating a relationship between an output and the maximum rolling element load. The maximum rolling element load calculation unit 252 calculates a maximum rolling element load $Q_{max}$ from actually measured data (step S52). In the first embodiment, the maximum rolling element load calculation unit 252 calculates the maximum rolling element load $Q_{max}$ for each section from the output of the power generator using the relationship of the graph illustrated in FIG. 8. The maximum rolling element load $Q_{max}$ refers to a load at a position (maximum load position) where a load (rolling element load) acting on the rolling elements 43 is maximized among loads acting on the plurality of rolling elements 43. The relationship between the output of the power generator and the maximum rolling element load $Q_{max}$ illustrated in FIG. 8 is obtained in advance by measurement or analysis and stored in the storage unit 230.

The maximum contact surface pressure calculation unit 253 calculates a maximum contact surface pressure $\sigma_{max}$ from the maximum rolling element load $Q_{max}$ (step S53). The maximum contact surface pressure $\sigma_{max}$ refers to a surface pressure at a contact position where the surface pressure is the maximum in distribution of the contact surface pressures received by the inner ring 41 from the rolling elements 43 at the maximum load position. The maximum contact surface pressure $\sigma_{max}$ is calculated by, for example, Equation (1) or Equation (2) based on a theory of Hertz. Equation (1) is an equation when the bearing 40 is a ball bearing. Equation (2) is an equation when the bearing 40 is a roller bearing. In Equations (1) and (2), E is a longitudinal elastic coefficient, m is a Poisson's number, $\Sigma\rho$ is a sum of curvatures of two objects, $\mu$ and v are coefficients that determine a major axis and a minor axis of a contact ellipse formed when the two objects are in elastic contact with each other, and all take values determined by the design of the bearing 40 or the like. $L_{we}$ is an effective length of the rolling element 43, that is, a length obtained by subtracting a chamfered length of the rolling element 43 from an entire length of the rolling element 43.

$$\sigma_{max} = \frac{1.5}{\pi}\left\{\frac{3}{E}\left(1 - \frac{1}{m^2}\right)\right\}^{-\frac{2}{3}}\frac{1}{\mu v}(\Sigma\rho)^{\frac{2}{3}}Q_{max}^{\frac{1}{3}} \qquad \cdots (1)$$

$$\sigma_{max} = \sqrt{\frac{E \cdot \Sigma\rho \cdot Q_{max}}{2\pi\left(1 - \frac{1}{m^2}\right)L_{we}}} \qquad \cdots (2)$$

As indicated in Table 1 and Equation (3), the estimated peeling length calculation unit 254 calculates a peeling progression amount $a_i$ for each section from the maximum contact surface pressure $\sigma_{max}$ and a stress repetition number N for each section, sums up $a_i$ to calculate a peeling progression amount $\Sigma a_i$, and adds the peeling progression amount $\Sigma a_i$ to a previously acquired peeling length $A_{n-1}$ to calculate a latest estimated peeling length $A_n$ (step S54). The stress repetition number N refers to the number of times that one point on the inner ring 41 repeatedly passes through the maximum load position. The stress repetition number N is calculated for each section from the rotation speed and the operating time for each section. In Equation (3), C and m are constants determined by materials, and F is a constant determined by a contact state between the rolling element 43 and the inner ring 41.

$$A_n = A_{n-1} + \sum_i a_i = A_{n-1} + \sum_i \left\{C \cdot \left(\sigma_{max}F\sqrt{\pi a_i}\right)^m \cdot N\right\} \qquad \cdots (3)$$

The remaining life calculation unit 255 determines whether the latest peeling length $A_n$ is less than a threshold value $A_{lim}$ (step S61). The threshold value $A_{lim}$ will be described later.

(Calculation of Remaining Life)

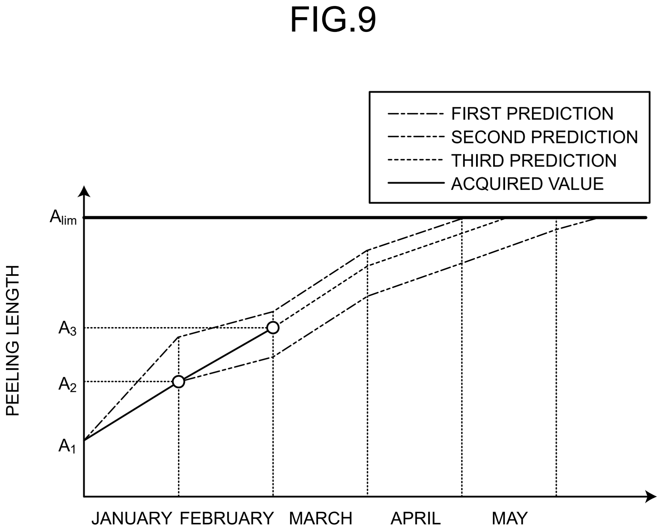

FIG. 9 is a diagram illustrating an example of a graph indicating a prediction of a progress of the peeling length. When the latest peeling length $A_n$ is less than the threshold value $A_{lim}$ (step S61: Yes), the remaining life calculation unit 255 predicts a future peeling length from prediction of a future operation status of the rotary machine, and calculates a remaining life from prediction of the peeling length (step S62). The operation status of the rotary machine is predicted from, for example, a past operation record in the same month. The prediction of the future peeling length is updated each time the latest peeling length $A_n$ is obtained. FIG. 9 illustrates an example in which a peeling length $A_1$ is acquired at the beginning of January and first prediction of the peeling length is made. In the example of FIG. 9, as a result of acquiring a peeling length $A_2$ that falls below the first prediction at the beginning of February, the prediction of the peeling length is corrected to second prediction, and as a result of acquiring a peeling length $A_3$ that exceeds the second prediction at the beginning of March, the prediction of the peeling length is corrected to third prediction. In this way, by updating the prediction of the future peeling progress according to the acquired latest peeling length and the latest operation status, it is possible to more accurately predict the peeling length. Similarly to the peeling length, the remaining life is also updated each time the latest peeling length $A_n$ is acquired. This makes it possible to more accurately predict the remaining life from the latest peeling length. The bearing remaining life diagnosis device 200 outputs data including the calculated remaining life via the output unit 220 or the communication unit 240.

On the other hand, when the latest peeling length $A_n$ is not the threshold value $A_{lim}$ (step S61: No), the control unit 250 outputs information indicating that there is no remaining life of the bearing 40 via the output unit 220 or the communication unit 240 without calculating the remaining life. In this case, the bearing remaining life diagnosis device 200 ends the bearing remaining life diagnosis.

In the first embodiment, the threshold value $A_{lim}$ of the peeling length is equal to an inter-rolling element distance. Here, the inter-rolling element distance refers to a length of contact points along the circumferential direction between the inner ring 41 and two adjacent rolling elements 43.

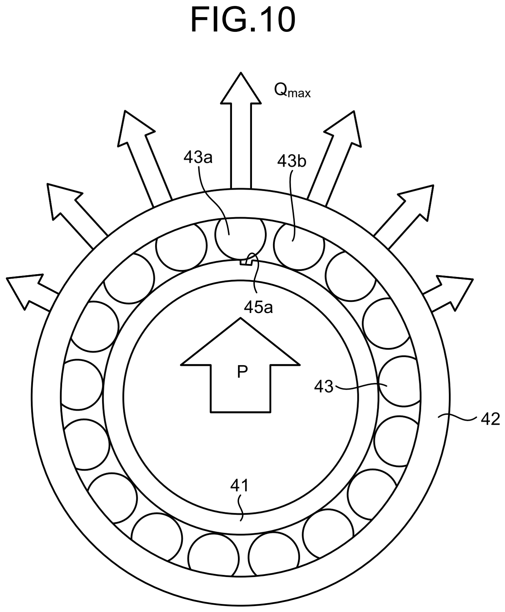

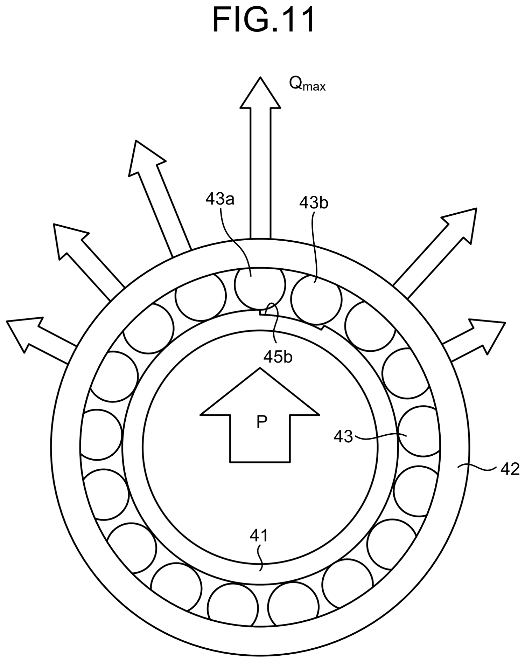

FIGS. 10 and 11 are schematic diagrams illustrating the maximum rolling element load $Q_{max}$ received from the rolling elements immediately after the rolling elements pass through the peeling in a state where a load P is applied to the bearing. As illustrated in FIG. 10, when the peeling length $A_n$ does not exceed the inter-rolling element distance, a rolling element 43b adjacent to a rolling element 43a on a peeling inlet side that imparts the maximum rolling element load $Q_{max}$ does not enter a peeling 45a. Therefore, the maximum rolling element load $Q_{max}$ received from the rolling element 43a is the same as that when the peeling 45a does not occur. On the other hand, as illustrated in FIG. 11, when the peeling length $A_n$ exceeds the inter-rolling element distance, the rolling element 43b enters a peeling 45b, so that the rolling element 43b that has entered the peeling 45b does not receive the load P. As a result, the maximum rolling element load $Q_{max}$ received from the rolling element 43a rapidly increases, and the peeling 45b rapidly progresses.

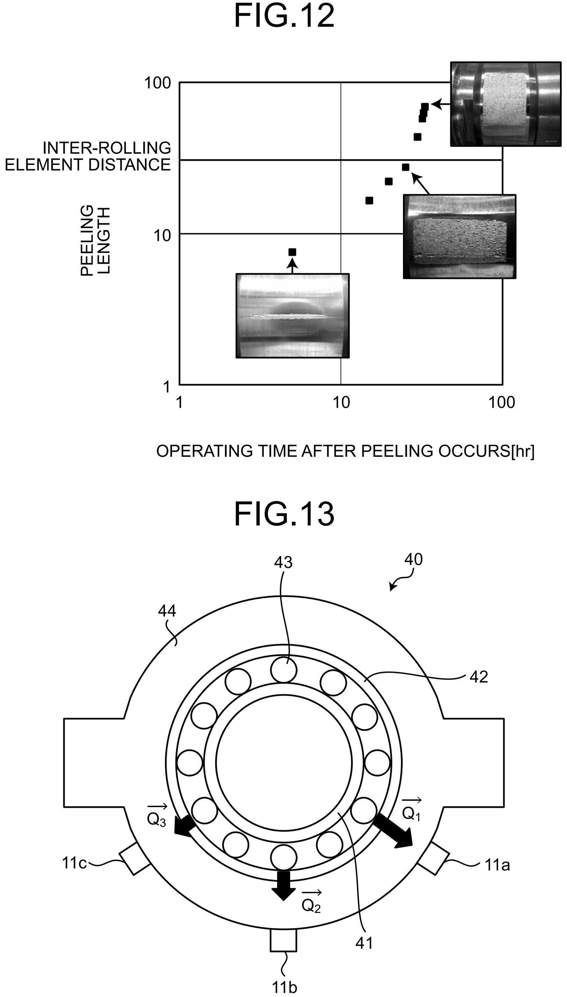

FIG. 12 is a diagram for describing a relationship between the peeling length and the operating time. In the test according to FIG. 12, an artificial flaw was imparted to the inner ring 41, the rotary machine was operated so that the load and the rotation speed were constant, and the relationship between the operating time and the peeling length was measured. As illustrated in FIG. 12, it can be seen that when the peeling length exceeds the inter-rolling element distance, peeling rapidly progresses. As a result, by making the threshold value $A_{lim}$ of the peeling length equal to the inter-rolling element distance, the bearing 40 can be replaced immediately before the peeling 45b rapidly progresses.

The bearing remaining life diagnosis method according to the first embodiment is not limited to the method illustrated in FIG. 5. For example, there may be no step of determining whether the parameter related to the bearing deterioration is within the predetermined range (step S10). In this case, the rotary machine may be precisely diagnosed periodically, and when it is determined that peeling has occurred, the diagnosis of the remaining life by the bearing remaining life diagnosis device 200 may be started. In addition, the step of determining the presence or absence of the initial peeling data and the peeling length data (steps S21 and S51) is not an essential step, and the peeling length acquisition unit 251 may always acquire the estimated initial peeling length as the initial peeling length or may always estimate the estimated peeling length as the peeling length.

As described above, the bearing remaining life diagnosis method according to the first embodiment is a bearing remaining life diagnosis method for predicting a remaining life of a rolling bearing having inner and outer bearing rings and rolling elements between both the bearing rings used in a rotary machine, the method includes a step of calculating an estimated peeling length that is an estimated value of a peeling length of the bearing ring, and a step of calculating the remaining life of the bearing based on the estimated peeling length and prediction of an operation status of the rotary machine. The step of calculating the estimated peeling length includes a step of calculating a maximum rolling element load from actually measured data, a step of calculating a maximum contact surface pressure from the maximum rolling element load, and a step of calculating the estimated peeling length of the bearing ring from the maximum contact surface pressure of the bearing ring. As a result, since the remaining life of the bearing can be predicted according to the operation status of the rotary machine, the remaining life of the bearing can be appropriately predicted.

Further, when the rotary machine is a power generator, the actually measured data may include an output of the power generator. Even in this case, the remaining life of the bearing can be appropriately predicted.

As a desirable aspect, in the step of calculating the estimated peeling length of the bearing ring, based on a relationship between operation data of the rotary machine and a peeling progression amount, the peeling progression amount is estimated by multiplying the peeling progression amount for each of the operation data by an occurrence frequency and summing the results, and the peeling progression amount is added to a previously acquired peeling length to calculate the estimated peeling length.

As a desirable aspect, in the step of calculating the remaining life of the bearing, the operation status of the rotary machine is predicted from a past operation record of the rotary machine. As a result, the remaining life of the bearing can be more appropriately predicted according to the operation status of the rotary machine.

In addition, in the bearing remaining life diagnosis method according to the first embodiment, when an actually-measured peeling length which is the actually measured value of the peeling length of the bearing ring is acquired, the remaining life of the bearing is calculated based on the actually-measured peeling length and the prediction of the operation status of the rotary machine. When the actually-measured peeling length is not acquired, a step of calculating the estimated peeling length and a step of calculating the remaining life of the bearing based on the estimated peeling length and the prediction of the operation status of the rotary machine are performed. Accordingly, when the actually-measured peeling length is acquired, the remaining life of the bearing can be predicted based on the actually-measured peeling length.

As described above, the bearing remaining life diagnosis device 200 according to the first embodiment is a bearing remaining life diagnosis method for predicting a remaining life of a rolling bearing having inner and outer bearing rings and rolling elements between both the bearing rings used in a rotary machine, and includes a peeling length acquisition unit configured to calculate an estimated peeling length which is an estimated value of a peeling length of the bearing ring, and a remaining life calculation unit configured to calculate the remaining life of the bearing based on the estimated peeling length of the bearing ring and prediction of an operation status of the rotary machine. The peeling length acquisition unit includes a maximum rolling element load calculation unit configured to calculate a maximum rolling element load from actually measured data, a maximum contact surface pressure calculation unit configured to calculate a maximum contact surface pressure from the maximum rolling element load, and an estimated peeling length calculation unit configured to calculate the estimated peeling length of the bearing ring from the maximum contact surface pressure of the bearing ring. As a result, since the remaining life of the bearing can be predicted according to the operation status of the rotary machine, the remaining life of the bearing can be appropriately predicted.

(Second Embodiment)

FIG. 13 is a diagram for describing a bearing remaining life diagnosis method according to a second embodiment. The bearing remaining life diagnosis method according to the second embodiment is different from that of the first embodiment in that, in the step of calculating the maximum rolling element load (step S52), the maximum rolling element load is calculated from physical quantities measured by sensors 11a to 11c provided in the housing 44 of the bearing 40.

The sensors 11a to 11c measure the physical quantities at respective installation places. The physical quantities measured by the sensors 11a to 11c include at least one of a physical quantity related to vibration in at least one direction, a displacement, and a strain. The detection device 10 collects the physical quantities measured by the sensors 11a to 11c and transmits the physical quantities to the bearing remaining life diagnosis device 200, so that the peeling length acquisition unit 251 acquires the physical quantities measured by the sensors 11a to 11c. Note that the number and positions of the sensors illustrated in FIG. 13 are merely examples, and the plurality of sensors may be provided in the circumferential direction of the housing 44.

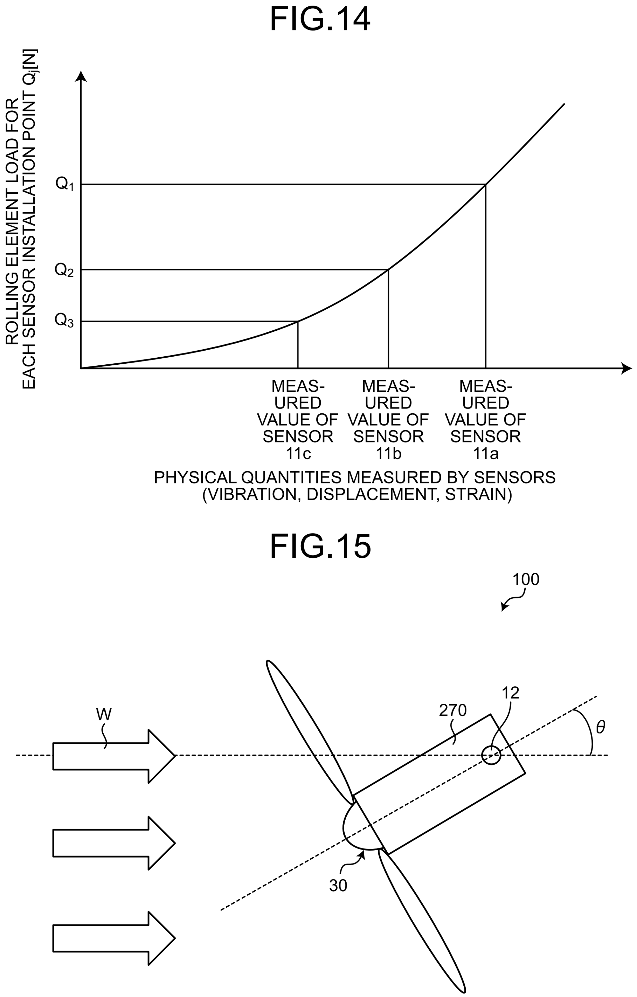

FIG. 14 is a diagram illustrating an example of a graph indicating a relationship between the physical quantities measured by the sensors and the rolling element load. In the second embodiment, the maximum rolling element load calculation unit 252 calculates rolling element loads $Q_1$ to $Q_3$ for each of the sensors 11a to 11c from the physical quantities measured by the sensors according to the relationship of the graph illustrated in FIG. 14. The relationship between the physical quantities measured by the sensors and the rolling element load illustrated in FIG. 14 is obtained in advance by finite element method (FEM) analysis of the housing 44 and stored in the storage unit 230.

The rolling element loads $Q_1$ to $Q_3$ for each of the sensors 11a to 11c may be calculated, for example, from displacements (radial displacements $\delta_r$) in a radial direction and displacements (axial displacements $\delta_a$) in the axial direction at installation points of the sensors 11a to 11c. The radial displacement $\delta_r$ and the axial displacement $\delta_a$ may be measured by the sensors 11a to 11c, or may be calculated from the physical quantities measured by the sensors 11a to 11c. More specifically, the radial displacement $\delta_r$ and the axial displacement $\delta_a$ may be calculated by integrating the acceleration twice with time, or may be calculated by integrating the speed once with time. In addition, the radial displacement $\delta_r$ and the axial displacement $\delta_a$ may be corrected from a transfer function obtained in advance by an impact test or the like in consideration of attenuation to the installation points of the sensors 11a to 11c. In the following description, the rolling element loads $Q_1$ to $Q_3$ for each of the plurality of sensors 11a to 11c will be generally described as a rolling

element load $Q_j$. In addition, the radial displacement $\delta_r$ and the axial displacement $\delta_a$ for each of the plurality of sensors will be described as a radial displacement $\delta_{jr}$ and an axial displacement $\delta_{ja}$, respectively.

The rolling element load $Q_j$ is calculated from at least one of the radial displacement $\delta_{jr}$ and the axial displacement $\delta_{ja}$ by any one of the following Equations (4) to (9). Equations (4) to (6) are equations when the bearing 40 is a ball bearing. Equations (7) to (9) are equations when the bearing 40 is a roller bearing. In Equations (4) to (9), $L_{we}$ is an effective length of the rolling element 43, $D_w$ is a diameter of the rolling element 43, and $\alpha$ is a contact angle. $\delta_{jmax}$ is a displacement obtained by the following Equation (10).

$$Q_j = \left(\frac{\cos\alpha \cdot L_{we}^{0.8}}{0.000077}\right)^{1/0.9} \cdot \delta_{jr}^{1/0.9} \qquad \cdots (4)$$

$$Q_j = \left(\frac{\sin\alpha \cdot L_{we}^{0.8}}{0.000077}\right)^{1/0.9} \cdot \delta_{ja}^{1/0.9} \qquad \cdots (5)$$

$$Q_j = \left(\frac{L_{we}^{0.8}}{0.000154}\right)^{1/0.9} \cdot \delta_{jmax}^{1/0.9} \qquad \cdots (6)$$

$$Q_j = \left(\frac{\cos\alpha \cdot D_w^{1/3}}{0.00044}\right)^{3} \cdot \delta_{jr}^{3} \qquad \cdots (7)$$

$$Q_j = \left(\frac{\sin\alpha \cdot D_w^{1/3}}{0.00044}\right)^{3} \cdot \delta_{ja}^{3} \qquad \cdots (8)$$

$$Q_j = \left(\frac{D_w^{1/3}}{0.00088}\right)^{3} \cdot \delta_{jmax}^{3} \qquad \cdots (9)$$

$$\delta_{jmax} = \delta_r \cos\alpha + \delta_a \sin\alpha \qquad \cdots (10)$$

The maximum rolling element load calculation unit 252 estimates a radial distribution of the rolling element loads from the rolling element load $Q_j$ calculated by the method described above. As a result, the maximum rolling element load calculation unit 252 calculates the maximum rolling element load $Q_{max}$ for each section from the distribution of the rolling element loads.

Although the bearing remaining life diagnosis method according to the second embodiment has been described above, the sensor is not limited to a so-called contact type sensor that performs measurement at the installation position. The sensor may be a non-contact type sensor, or one sensor may perform measurement at a plurality of points.

As described above, in the bearing remaining life diagnosis method according to the second embodiment, in the step of calculating the maximum rolling element load, the actually measured data includes the physical quantities measured by the sensors at the plurality of measurement points aligned in the circumferential direction of the bearing, the rolling element load is calculated from the actually measured data, and the maximum rolling element load is calculated from the rolling element load. Even in this case, the remaining life of the bearing can be appropriately predicted.

In addition, the physical quantity measured by the sensor may be a physical quantity related to vibration at the measurement point. Even in this case, the remaining life of the bearing can be appropriately predicted.

The physical quantity measured by the sensor may be a displacement at the measurement point. Even in this case, the remaining life of the bearing can be appropriately predicted.

In addition, the physical quantity measured by the sensor may be a strain at the measurement point. Even in this case, the remaining life of the bearing can be appropriately predicted.

As a desirable aspect, the rolling element load may be calculated from the actually measured data based on a relationship determined by FEM analysis. This makes it possible to more appropriately predict the remaining life of the bearing.

The rolling element load may be calculated from a radial displacement or an axial displacement obtained by the value measured by the sensor. Even in this case, the remaining life of the bearing can be appropriately predicted.

The physical quantity measured by the sensor may be a radial displacement or an axial displacement at the measurement point. Even in this case, the remaining life of the bearing can be appropriately predicted.

The physical quantity measured by the sensor may be a radial acceleration or an axial acceleration at the measurement point, and the radial displacement or the axial displacement may be calculated from the radial acceleration or the axial acceleration. Even in this case, the remaining life of the bearing can be appropriately predicted.

The physical quantity measured by the sensor may be a radial strain or an axial strain at the measurement point, and the radial displacement or the axial displacement may be calculated from the radial strain or the axial strain. Even in this case, the remaining life of the bearing can be appropriately predicted.

(Third Embodiment)

FIG. 15 is a plan diagram for describing a bearing remaining life diagnosis method according to a third embodiment. More specifically, FIG. 15 is a plan diagram of a wind power generator 100 according to the third embodiment, viewed in the vertical direction. The bearing remaining life diagnosis method according to the third embodiment is different from that of the first embodiment in that, in the step of calculating the maximum rolling element load (step S52), the maximum rolling element load is calculated from a wind direction and a wind speed measured by a wind direction/anemometer 12 provided in the wind power generator 100.

The wind direction/anemometer 12 measures a direction and a speed of wind W directed to the wind power generator 100. The detection device 10 collects the measured wind direction and wind speed and transmits the collected wind direction and wind speed to the bearing remaining life diagnosis device 200, so that the peeling length acquisition unit 251 acquires the wind direction and wind speed. Here, the wind direction refers to an angular difference $\theta$ between an azimuth angle of the wind W and a yaw turning angle of the wind power generator 100. In the example of FIG. 15, the peeling length acquisition unit 251 acquires an angle formed by the direction of the wind W and the rotation axis of the rotor 30 as the angular difference $\theta$ in plan view in the vertical direction.

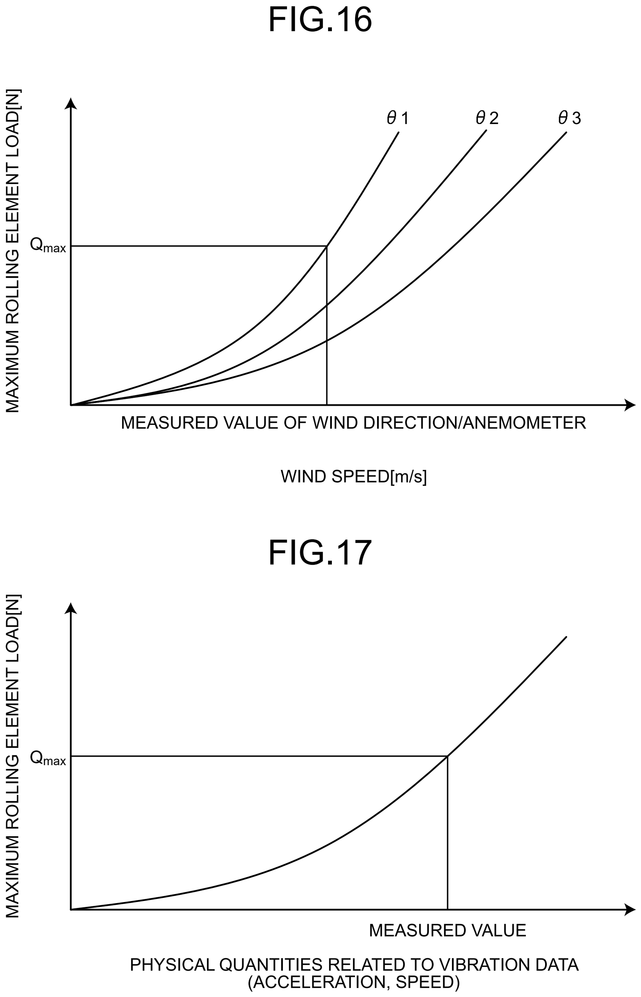

FIG. 16 is a diagram illustrating an example of a graph indicating a relationship between the wind speed and the maximum rolling element load. In the second embodiment, the maximum rolling element load calculation unit 252 calculates the maximum rolling element load $Q_{max}$ from the wind speed according to the relationship of the graph illustrated in FIG. 16. The relationship between the wind speed and the maximum rolling element load $Q_{max}$ varies depending on the wind direction. In the example of FIG. 16, when the angular difference $\theta$ is $\theta1$, the maximum rolling element load $Q_{max}$ is calculated from the relationship between the wind speed and the maximum rolling element load $Q_{max}$ for the angular difference $\theta1$. The relationship between the wind speed and the maximum rolling element load illustrated in FIG. 16 is obtained in advance by measurement or analysis and stored in the storage unit 230.

As described above, in the bearing remaining life diagnosis method according to the third embodiment, the rotary machine is the wind power generator, and the actually measured data includes the direction and speed of the wind received by the wind power generator. Even in this case, the remaining life of the bearing can be appropriately predicted.

(Fourth Embodiment)

A bearing remaining life diagnosis method according to a fourth embodiment is different from that of the first embodiment in that the maximum rolling element load is calculated from the physical quantity related to vibration of the bearing 40 in the step of calculating the maximum rolling element load (step S52).

FIG. 17 is a diagram illustrating an example of a graph indicating a relationship between the physical quantity related to vibration and the maximum rolling element load. In the fourth embodiment, the maximum rolling element load calculation unit 252 calculates the maximum rolling element load $Q_{max}$ from the physical quantity related to vibration of the bearing 40. The relationship between the physical quantity related to vibration of the bearing 40 and the maximum rolling element load illustrated in FIG. 17 is obtained in advance by measurement or analysis and stored in the storage unit 230.

The vibration data is, for example, an amplitude of rolling element passing vibration. The amplitude of the rolling element passing vibration refers to an amplitude of vibration generated by a change in a bearing center position due to a continuous change in the position of the rolling element with respect to a load direction caused by revolution of the rolling element. When a large load is generated in the bearing 40, the amplitude of the rolling element passing vibration increases due to inrush vibration of a loaded zone receiving the rolling element load. On the other hand, when the load is small, the amplitude of the rolling element passing vibration decreases. Therefore, the maximum rolling element load $Q_{max}$ can be calculated from the rolling element passing vibration by the relationship between the maximum rolling element load $Q_{max}$ and the rolling element passing vibration.

**EP 4 722 681 A1**

The vibration data may be, for example, an amplitude of gear meshing vibration. The amplitude of the gear meshing vibration refers to an amplitude of vibration generated by an impact applied to a gear tooth surface when the gears of the speed-up gear 50 transmit a meshing force. When a large load is applied to the gear, the amplitude of the gear meshing vibration increases. On the other hand, when the load is small, the amplitude decreases. Therefore, the maximum rolling element load $Q_{max}$ can be calculated from a gear meshing frequency based on a relationship between the maximum rolling element load $Q_{max}$ and the gear meshing frequency. In a case where the gear is a helical gear, the vibration in the radial direction tends to be smaller than that in a case of a spur gear, but since the vibration in the axial direction occurs, it is preferable to measure not only vibration in the radial direction but also vibration in the axial direction.

As described above, in the bearing remaining life diagnosis method according to the fourth embodiment, the actually measured data includes the physical quantity related to vibration of the bearing. Even in this case, the remaining life of the bearing can be appropriately predicted.

The physical quantity related to vibration of the bearing includes the amplitude of the rolling element passing vibration of the bearing. Even in this case, the remaining life of the bearing can be appropriately predicted.

The physical quantity related to vibration of the bearing includes the amplitude of the gear meshing vibration of the rotary machine. Even in this case, the remaining life of the bearing can be appropriately predicted.

(Fifth Embodiment)

A bearing remaining life diagnosis method according to a fifth embodiment is different from that of the first embodiment in that, in the step of calculating the maximum rolling element load (step S52), the maximum rolling element load is calculated from physical quantities at measurement points of a plurality of components coupled to the main shaft 51.

In the fifth embodiment, a sensor is installed on each of the rotor 30 and the gear box, and physical quantities (phase, speed, and acceleration) related to vibrations in three axial directions are measured. The detection device 10 collects the physical quantities measured by the sensors and transmits the physical quantities to the bearing remaining life diagnosis device 200, so that the peeling length acquisition unit 251 acquires the physical quantities measured by the sensors. When the wind power generator 100 is a direct drive type, the sensors may be provided in the power generator 60 instead of the gear box. The sensors may be directly provided on the main shaft 51. In addition, the sensors are not limited to a so-called contact type sensor that performs measurement at the installation position, and may be a non-contact type sensor, or one sensor may perform measurement at a plurality of points.

In the fifth embodiment, the maximum rolling element load calculation unit 252 calculates the maximum rolling element load from the physical quantities measured by the sensors. The relationship between the physical quantities measured by the sensors and the maximum rolling element load is obtained in advance by motion analysis of a drive train of the main shaft 51 and stored in the storage unit 230.

As described above, in the bearing remaining life diagnosis method according to the fifth embodiment, the rotary machine is a wind power generator. The actually measured data includes physical quantities related to vibrations in three directions perpendicular to each other at measurement points on a plurality of components coupled to the main shaft on which the bearing is provided. Even in this case, the remaining life of the bearing can be appropriately predicted.

(Sixth Embodiment)

A bearing remaining life diagnosis method according to a sixth embodiment is different from that of the first embodiment in that the maximum rolling element load is calculated from a theory related to a bearing life. In the sixth embodiment, in the step of calculating the maximum rolling element load (step S52), an operating time $T_a$ until peeling occurs is calculated, a dynamic equivalent load P is calculated from the operating time $T_a$, a radial load $F_r$ and an axial load $F_a$ are calculated from the dynamic equivalent load P, and the maximum rolling element load $Q_{max}$ is calculated from the radial load $F_r$ and the axial load $F_a$.

(Calculation of Operating Time $T_a$)

Table 2 is a table for describing a method for calculating the operating time $T_a$ of the bearing used in the speed-up gear 50. The bearing life changes with a reciprocal of a constant q-th power of a change rate $\Delta P$ of the dynamic equivalent load P. In addition, the dynamic equivalent load P and a power generator output G have a certain relationship. From this, as indicated in Table 2, it can be said that the change rate $\Delta P$ of the dynamic equivalent load P increases as the power generator output G increases. In Table 2, $G_0$ is the rated power (kW) of the power generator. As indicated in Equation (11), a bearing life change rate $\Delta L$ is represented by the reciprocal of the constant q-th power of the change rate $\Delta P$ of the dynamic equivalent load P. A value of q is 3 when the bearing 40 is a ball bearing, and 10/3 when the bearing is a roller bearing. In the example of Table 2, a case where the value of q is 10/3 is indicated.

13

Table 2

| Power Generator output G [kW] ($G_0$: rated power [kW]) | Dynamic equivalent load change rate $\Delta P$ | Bearing life change rate $\Delta L$ (q = 10/3) | Operating time $t_k$ in range of power generator output | Weighted operating time $t_{kL}$ |
|---|---|---|---|---|
| $G_0 \leq G < 1.1G_0$ | 1.1 | 0.7 | $t_{11}$ | $T_{11L} = t_{11}/0.7$ |
| $0.9G_0 \leq G < G_0$ | 1.0 | 1.0 | $t_{10}$ | $T_{10L} = t_{10}/1.0$ |
| $0.8G_0 \leq G < 0.9G_0$ | 0.9 | 1.4 | $t_9$ | $T_{9L} = t_9/1.4$ |
| $0.7G_0 \leq G < 0.8G_0$ | 0.8 | 2.1 | $t_8$ | $T_{8L} = t_8/2.1$ |
| $0.6G_0 \leq G < 0.7G_0$ | 0.7 | 3.3 | $t_7$ | $T_{7L} = t_7/3.3$ |
| $0.5G_0 \leq G < 0.6G_0$ | 0.6 | 5.5 | $t_6$ | $T_{6L} = t_6/5.5$ |
| $0.4G_0 \leq G < 0.5G_0$ | 0.5 | 10 | $t_5$ | $T_{5L} = t_5/10$ |
| $0.3G_0 \leq G < 0.4G_0$ | 0.4 | 21 | $t_4$ | $T_{4L} = t_4/21$ |
| $0.2G_0 \leq G < 0.3G_0$ | 0.3 | 55 | $t_3$ | $T_{3L} = t_3/55$ |
| $0.1G_0 \leq G < 0.2G_0$ | 0.2 | 214 | $t_2$ | $T_{2L} = t_2/214$ |
| $G < 0.1G_0$ | 0.1 | 2154 | $t_1$ | $T_{1L} = t_1/2154$ |

$$\Delta L = \frac{1}{\Delta P^q} \qquad \cdots (11)$$

The operating time $T_a$ is calculated by the following method. Data in which the output and the time until peeling occurs are associated is acquired, and an operating time $t_k$ for each range of the power generator output G is aggregated as indicated in Table 2. Then, the operating time $t_k$ for each range of the power generator output G is divided by the bearing life change rate $\Delta L$ to calculate an operating time $t_{kL}$ for each range of the weighted power generator output G. As a result, as indicated in Equation (12), the operating time $T_a$ can be calculated by summing the operating time periods $t_{kL}$.

$$T_a = \sum_k T_{kL} \qquad \cdots (12)$$

(Dynamic Equivalent Load P)

The dynamic equivalent load P is calculated from the operating time $T_a$ by simultaneously solving Equations (13) and (14), which are corrected life calculation equations conforming to ISO 281:2007. In Equation (13), $L_{nmh}$ represents a corrected rated life time of the bearing, $a_1$ represents a reliability coefficient, $a_{ISO}$ represents a life correction coefficient, $\omega$ represents a bearing ring rotation speed, $C_r$ represents a dynamic rated load of the bearing, and P represents a dynamic equivalent load. In addition, q is 3 in a case of a ball bearing and 10/3 in a case of a roller bearing. In Equation (14), $C_u$ represents a fatigue limit load, K represents a viscosity ratio of the lubricating oil, and $e_c$ represents a contamination coefficient. The fatigue limit load $C_u$ can be calculated from the specifications of the bearing 40. The viscosity ratio K is represented by a ratio of an operation viscosity v to a reference kinematic viscosity $v_1$. The reference kinematic viscosity $v_1$ can be calculated from the specifications and the rotation speed of the bearing 40, and the operation viscosity v is calculated based on an operating temperature of the lubricating oil actually used and information on the kinematic viscosities of the lubricating oil at 40°C and 100°C. The operating temperature of the lubricating oil may be acquired by monitoring or may be estimated based on design information of equipment. The kinematic viscosities of the lubricating oil at 40°C and 100°C can be obtained by confirming the specifications of the lubricating oil used. The contamination coefficient $e_c$ can be calculated by a calculation equation according to a filtration performance of a filter based on the specifications of the bearing 40 and the viscosity ratio $\kappa$. When the filtration performance can be confirmed from a specification table of a filter element, the corresponding calculation equation is used. When the filtration performance cannot be confirmed, but a monitoring device such as a particle counter is attached, the filtration performance is estimated from these detection values. When the filtration performance is unknown, a calculation equation corresponding to a contamination code conforming to IEC 61400-4 Ed. 1.0:2012 can be adopted.

$$L_{nmh} = T_a = a_1 \cdot a_{ISO} \cdot \frac{10^6}{60\omega}\left(\frac{C_r}{P}\right)^q \qquad \cdots (13)$$

$$a_{ISO} = f\left(\frac{e_c C_u}{P}, \kappa\right) \qquad \cdots (14)$$

(Radial Load $F_r$ and Axial Load $F_a$)

The radial load $F_r$ and the axial load $F_a$ are calculated based on the dynamic equivalent load P by Equations (15) and (16). In Equations (15) and (16), e is a load ratio between $F_r$ and $F_a$, and X and Y are load coefficients determined by the load ratio e. Here, in a case of a pure radial load condition that does not receive an axial load, the radial load $F_r$ can be the dynamic equivalent load P, and in a case of a pure axial load condition that does not receive a radial load, the axial load $F_a$ can be the dynamic equivalent load P.

$$F_r = \frac{P}{X + Ye} \qquad \cdots (15)$$

$$F_a = eF_r \qquad \cdots (16)$$

The load ratio e can be estimated by the following method.

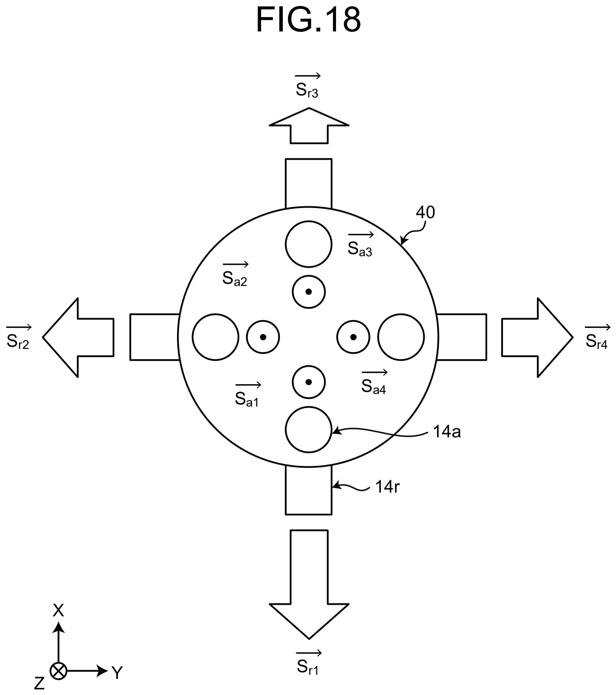

FIG. 18 is a diagram for describing an example of a method for estimating the load ratio e. As illustrated in FIG. 18, the housing 44 of the bearing 40 is provided with a plurality of sensors 14r in the radial direction and a plurality of sensors 14a in the axial direction. In the example of FIG. 18, four sensors 14r and four sensors 14a are provided at equal intervals in the radial direction, but this is merely an example. The sensors 14r and the sensors 14a are single-axis sensors, and measure vector amounts $S_{r1}$ to $S_{r4}$ related to vibration in the radial direction and vector amounts $S_{a1}$ to $S_{a4}$ related to vibration in the axial direction, respectively. Here, the vector amounts related to vibration are, for example, a phase vector, a speed vector, an acceleration vector, or the like associated with vibration of the measurement target. In the case of FIG. 18, the load ratio e can be estimated by obtaining a composite vector $S_r$ of the measured vector amounts related to vibration in the radial direction by Equation (17), obtaining a composite vector $S_a$ of the measured vector amounts related to vibration in the axial direction by Equation (18), and taking a ratio of a magnitude of the composite vector $S_a$ to a magnitude of the composite vector $S_r$ as indicated in Equation (19).

$$\vec{S_r} = \sum_j \vec{S_{rj}} \qquad \cdots (17)$$

$$\vec{S_a} = \sum_j \vec{S_{aj}} \qquad \cdots (18)$$

$$e = \frac{|\vec{S_a}|}{|\vec{S_r}|} \qquad \cdots (19)$$

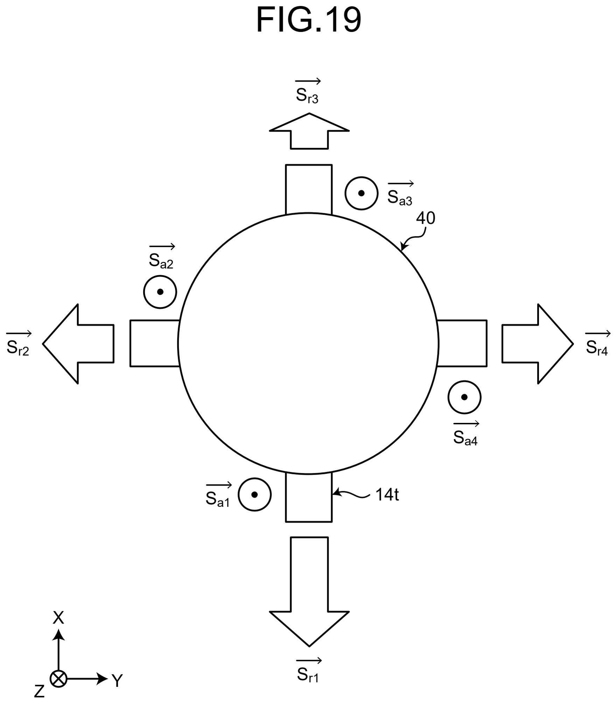

FIG. 19 is a diagram for describing a different example of the method for estimating the load ratio e. As illustrated in FIG. 19, a plurality of triaxial sensors 14t may be provided in the housing 44 of the bearing 40 in the radial direction, and the vector amounts $S_{r1}$ to $S_{r4}$ and $S_{a1}$ to $S_{a4}$ related to the vibrations in the radial direction and the axial direction may be measured by the sensors 14t, respectively. A plurality of sensors 14a are provided in the axial direction. In the example of FIG. 19, four sensors 14t are provided at equal intervals in the radial direction, but this is merely an example. Even in the case of FIG. 19, similarly to the case of FIG. 18, the load ratio e can be estimated by obtaining the composite vector $S_r$ of the measured vector amounts related to the vibration in the radial direction by Equation (17), obtaining the composite vector $S_a$ of the measured vector amounts related to the vibration in the axial direction by Equation (18), and taking a ratio of a magnitude of the composite vector $S_a$ to a magnitude of the composite vector $S_r$ as indicated in Equation (19).

The method for estimating the load ratio e is not limited to the methods according to FIGS. 18 and 19. For example, when the maximum load position is known, the load ratio e may be estimated using only vibrations in the radial direction and the axial direction measured in the azimuth of the maximum load position. As described in the fifth embodiment, the load ratio e may be estimated by measuring a physical quantity related to vibration of the main shaft 51 or a member coupled to the main shaft.

(Maximum Rolling Element Load $Q_{max}$)

The maximum rolling element load $Q_{max}$ is calculated from the dynamic equivalent load P by Equations (20) and (21). In Equations (20) and (21), Z is a number of rolling elements, and $\alpha$ is a contact angle. In addition, $J_r$ is a radial integral, and $J_a$ is an axial integral. The radial integral and the axial integral are coefficients defined in Sjovall, H., The load distribution within ball and roller bearings under given external radial and axial load, Tek Tidskr, Mek., Vol. h, No. 9 (1933).

$$Q_{max} = \frac{F_r}{J_r Z \cos\alpha} \qquad \cdots (20)$$

$$Q_{max} = \frac{F_a}{J_a Z \sin\alpha} \qquad \cdots (21)$$

When the pure radial load condition or the pure axial load condition is not satisfied, the radial integral $J_r$ and the axial integral $J_a$ can be calculated from the load ratio e.

In the case of the pure radial load condition, the radial integral $J_r$ and the axial integral $J_a$ can be calculated by Equations (22) to (24). Equation (22) is used when the bearing 40 is a cylindrical or tapered roller bearing. Equation (23) is used when the bearing 40 is a self-aligning roller bearing. Equation (24) is used when the bearing 40 is a ball bearing. In Equations (22) to (24), f($\varepsilon$) is a function of a load factor $\varepsilon$, but can be calculated from the radial load $F_r$, a bearing gap, and the specifications of the bearing 40. Since a relationship between the load factor $\varepsilon$ and the radial integral $J_r$ with respect to f($\varepsilon$) is theoretically determined, the radial integral $J_r$ can be calculated from the load factor $\varepsilon$.

$$f(\varepsilon) = \frac{1 - 2\varepsilon}{\varepsilon} J_r^{-0.9} \qquad \cdots (22)$$

$$f(\varepsilon) = \frac{1 - 2\varepsilon}{\varepsilon} J_r^{-0.75} \qquad \cdots (23)$$

$$f(\varepsilon) = \frac{1 - 2\varepsilon}{\varepsilon} J_r^{-2/3} \qquad \cdots (24)$$

The load factor $\varepsilon$ can be estimated by the following method.

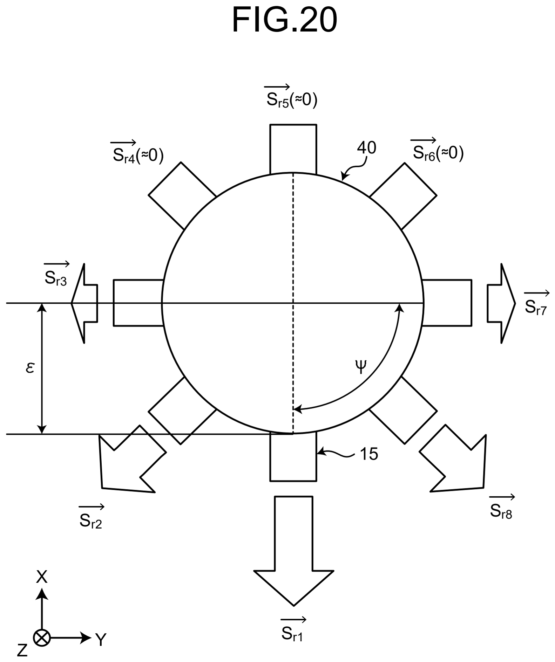

FIG. 20 is a diagram for describing an example of a method for estimating the load factor $\varepsilon$. As illustrated in FIG. 20, the housing 44 of the bearing 40 is provided with a plurality of sensors 15 in the radial direction. In the example of FIG. 20, eight sensors 15 are provided at equal intervals in the radial direction, but this is merely an example. The sensors 14r and the sensors 14a are single-axis sensors, and measure vector amounts $S_{r1}$ to $S_{r8}$ related to vibration in the radial direction, respectively. Here, the physical quantities measured by the sensors 15 are, for example, a phase, a speed, an acceleration, or the like. The maximum load position and a boundary position between a loaded zone and a non-loaded zone are estimated from a circumferential distribution of the physical quantities obtained by the sensors 15. In the example of FIG. 20, since the magnitude of the vector amount $S_{r1}$ related to vibration is the largest among the vector amounts $S_{r1}$ to $S_{r8}$ related to vibration, the measurement position of the vector amount $S_{r1}$ related to vibration is estimated as the maximum load position. Furthermore, in the example of FIG. 20, since the vector amounts $S_{r4}$ to $S_{r6}$ related to vibration have values close to 0, it is assumed that the measurement positions of the vector amounts $S_{r4}$ to $S_{r6}$ related to vibration are within the non-loaded zone, and the measurement positions of the vector amounts $S_{r3}$ and $S_{r7}$ related to vibration are estimated as the boundary position between the loaded zone and the non-loaded zone. As a result, an angle $\Psi$ between a direction from a rotation center toward the maximum load position and a boundary between the loaded zone and the non-loaded zone is calculated. In the case of FIG. 20, the load factor $\varepsilon$ can be estimated from the calculated angle $\Psi$ by Equation

(25).

$$\varepsilon = \frac{1}{2}(1 - \cos\psi) \qquad \cdots (25)$$

The method for estimating the load factor $\varepsilon$ is not limited to the method according to FIG. 20. For example, when the maximum load position is known, the load factor $\varepsilon$ can be estimated by measuring a vector amount related to vibration at the maximum load position using the triaxial sensor. More specifically, at the maximum load position, the vector amount related to vibration in the radial direction and the vector amount related to vibration in the direction forming 90° in the radial direction and a rotation direction are simultaneously measured. In this case, the load factor $\varepsilon$ can be estimated by Equation (25) by calculating a composite vector of the maximum load position by adding the measured vector amounts in the two directions, and setting an angle formed by the composite vector of the maximum load position and the radial direction of the maximum load position as the angle $\Psi$.

As described above, in the bearing remaining life diagnosis method according to the sixth embodiment, in the step of calculating the maximum rolling element load, the actually measured data includes physical quantities at a plurality of measurement points arranged in the circumferential direction of the bearing, the rolling element load is calculated from the actually measured data, and the maximum rolling element load is calculated from the rolling element load and the life correction coefficient. Even in this case, the remaining life of the bearing can be appropriately predicted.

In the bearing remaining life diagnosis method according to the sixth embodiment, in the step of calculating the maximum rolling element load, actually measured data includes physical quantities at a plurality of measurement points arranged in the circumferential direction of the bearing, a rolling element load is calculated from the actually measured data, and the maximum rolling element load is calculated from the rolling element load, a load ratio between a radial load and an axial load, and a load factor. Even in this case, the remaining life of the bearing can be appropriately predicted.

In addition, the load ratio may be estimated from vector amounts related to vibration in the radial direction and vector amounts related to vibration in the axial direction simultaneously measured at a plurality of measurement points arranged at equal intervals in the circumferential direction of the bearing. Even in this case, the remaining life of the bearing can be appropriately predicted.

The load ratio may be estimated from a ratio between a physical quantity related to vibration in a radial direction and a physical quantity related to vibration in an axial direction at a maximum load position. Even in this case, the remaining life of the bearing can be appropriately predicted.

In addition, the load factor may be calculated from measured data related to the rotary machine. Even in this case, the remaining life of the bearing can be appropriately predicted.

The load factor may be estimated by estimating a maximum load position and a position of a boundary between a loaded zone and a non-loaded zone from a circumferential distribution of physical quantities related to vibration in a radial direction simultaneously measured at a plurality of measurement points arranged at equal intervals in the circumferential direction of the bearing. Even in this case, the remaining life of the bearing can be appropriately predicted.

The load factor may be estimated from an angle formed by a radial direction of the maximum load position and a vector amount obtained by adding a vector amount related to vibration in the radial direction of the maximum load position and a vector amount related to vibration in a direction orthogonal to an axial direction and the radial direction of the maximum load position. Even in this case, the remaining life of the bearing can be appropriately predicted.

Note that the drawings used in the above description are conceptual diagrams for providing a qualitative description of the present disclosure, and are not limited thereto. In addition, the above-described embodiments are preferred embodiments of the present disclosure, but are not limited thereto, and various modifications can be made without departing from the gist of the present disclosure.

Reference Signs List

1 BEARING REMAINING LIFE DIAGNOSIS SYSTEM
10 DETECTION DEVICE
11 DATA COLLECTION UNIT
11a to 11c SENSOR
12 WIND DIRECTION/ANEMOMETER
14a, 14r, 14t SENSOR
15 SENSOR
30 ROTOR

**EP 4 722 681 A1**

31 HUB
32 BLADE
40 BEARING
41 INNER RING
42 OUTER RING
43, 43a, 43b ROLLING ELEMENT
44 HOUSING
45a, 45b PEELING
50 SPEED-UP GEAR
51 MAIN SHAFT
60 POWER GENERATOR
61 POWER GENERATOR SHAFT
70 NACELLE
80 TOWER
90 BASE
100 WIND POWER GENERATOR
200 BEARING REMAINING LIFE DIAGNOSIS DEVICE
210 INPUT UNIT
220 OUTPUT UNIT
230 STORAGE UNIT
240 COMMUNICATION UNIT
250 CONTROL UNIT
251 PEELING LENGTH ACQUISITION UNIT
252 MAXIMUM ROLLING ELEMENT LOAD CALCULATION UNIT
253 MAXIMUM CONTACT SURFACE PRESSURE CALCULATION UNIT
254 ESTIMATED PEELING LENGTH CALCULATION UNIT
255 REMAINING LIFE CALCULATION UNIT
NW NETWORK
W WIND

**Claims**

1. A bearing remaining life diagnosis method for predicting a remaining life of a rolling bearing used in a rotary machine and having inner and outer bearing rings and rolling elements between both the bearing rings, the bearing remaining life diagnosis method comprising:

   a step of calculating an estimated peeling length which is an estimated value of a peeling length of the bearing ring; and
   a step of calculating the remaining life of the bearing based on the estimated peeling length and prediction of an operation status of the rotary machine, wherein
   the step of calculating the estimated peeling length includes
   a step of calculating a maximum rolling element load from actually measured data,
   a step of calculating a maximum contact surface pressure from the maximum rolling element load, and
   a step of calculating the estimated peeling length of the bearing ring from the maximum contact surface pressure of the bearing ring.

2. The bearing remaining life diagnosis method according to claim 1, wherein in the step of calculating the maximum rolling element load, the actually measured data includes physical quantities measured by sensors at a plurality of measurement points arranged in a circumferential direction of the bearing, a rolling element load is calculated from the actually measured data, and the maximum rolling element load is calculated from the rolling element load.

3. The bearing remaining life diagnosis method according to claim 2, wherein the physical quantity measured by the sensor is a physical quantity related to vibration at the measurement point.

4. The bearing remaining life diagnosis method according to claim 2, wherein the physical quantity measured by the sensor is a displacement at the measurement point.

18

**5.** The bearing remaining life diagnosis method according to claim 2, wherein the physical quantity measured by the sensor is a strain at the measurement point.

**6.** The bearing remaining life diagnosis method according to any one of claims 2 to 5, wherein the rolling element load is calculated from the actually measured data based on a relationship determined by FEM analysis.

**7.** The bearing remaining life diagnosis method according to claim 2, wherein the rolling element load is calculated from a radial displacement or an axial displacement.

**8.** The bearing remaining life diagnosis method according to claim 7, wherein the physical quantity measured by the sensor is a radial displacement or an axial displacement at the measurement point.

**9.** The bearing remaining life diagnosis method according to claim 7, wherein

the physical quantity measured by the sensor is a radial acceleration or an axial acceleration at the measurement point, and
the radial displacement or the axial displacement is calculated from the radial acceleration or the axial acceleration.

**10.** The bearing remaining life diagnosis method according to claim 7, wherein

the physical quantity measured by the sensor is a radial strain or an axial strain at the measurement point, and
the radial displacement or the axial displacement is calculated from the radial strain or the axial strain.

**11.** The bearing remaining life diagnosis method according to claim 1, wherein

the rotary machine is a power generator, and
the actually measured data includes an output of the power generator.

**12.** The bearing remaining life diagnosis method according to claim 1, wherein

the rotary machine is a wind power generator, and
the actually measured data includes a direction and a speed of wind received by the wind power generator.

**13.** The bearing remaining life diagnosis method according to claim 1, wherein the actually measured data includes a physical quantity related to vibration of the bearing.

**14.** The bearing remaining life diagnosis method according to claim 13, wherein the physical quantity related to vibration of the bearing includes an amplitude of rolling element passing vibration of the bearing.

**15.** The bearing remaining life diagnosis method according to claim 13, wherein the physical quantity related to vibration of the bearing includes an amplitude of gear meshing vibration of the rotary machine.

**16.** The bearing remaining life diagnosis method according to claim 1, wherein the actually measured data includes physical quantities related to vibrations in three directions perpendicular to each other at measurement points in a plurality of components coupled to a main shaft on which the bearing is provided.

**17.** The bearing remaining life diagnosis method according to claim 1, wherein in the step of calculating the maximum rolling element load, the actually measured data includes physical quantities at a plurality of measurement points arranged in a circumferential direction of the bearing, a rolling element load is calculated from the actually measured data, and the maximum rolling element load is calculated from the rolling element load and a life correction coefficient.

**18.** The bearing remaining life diagnosis method according to claim 1 or 17, wherein in the step of calculating the maximum rolling element load, the actually measured data includes physical quantities at a plurality of measurement points arranged in a circumferential direction of the bearing, a rolling element load is calculated from the actually measured data, and the maximum rolling element load is calculated from the rolling element load, a load ratio between a radial load and an axial load, and a load factor.

19. The bearing remaining life diagnosis method according to claim 18, wherein the load ratio is estimated from a vector amount related to vibration in a radial direction and a vector amount related to vibration in an axial direction simultaneously measured at a plurality of measurement points arranged at equal intervals in the circumferential direction of the bearing.

20. The bearing remaining life diagnosis method according to claim 18, wherein the load ratio is estimated from a ratio between a physical quantity related to vibration in a radial direction and a physical quantity related to vibration in an axial direction at a maximum load position.

21. The bearing remaining life diagnosis method according to claim 18, wherein the load factor is calculated from measured data related to the rotary machine.

22. The bearing remaining life diagnosis method according to claim 21, wherein the load factor is estimated by estimating a maximum load position and a position of a boundary between a loaded zone and a non-loaded zone from a circumferential distribution of physical quantities related to vibration in a radial direction simultaneously measured at a plurality of measurement points arranged at equal intervals in the circumferential direction of the bearing.

23. The bearing remaining life diagnosis method according to claim 21, wherein the load factor is estimated from an angle formed by a radial direction of a maximum load position and a composite vector of a vector amount related to vibration in the radial direction of the maximum load position and a vector amount related to vibration in a direction orthogonal to an axial direction and the radial direction of the maximum load position.

24. The bearing remaining life diagnosis method according to claim 1, wherein

in the step of calculating the estimated peeling length of the bearing ring,
based on a relationship between operation data of the rotary machine and a peeling progression amount, the peeling progression amount is estimated by multiplying the peeling progression amount for each of the operation data by an occurrence frequency and summing results, and
the peeling progression amount is added to a previously acquired peeling length to calculate the estimated peeling length.

25. The bearing remaining life diagnosis method according to claim 1, wherein in the step of calculating a latest remaining life of the bearing, the operation status of the rotary machine is predicted by a past operation record of the rotary machine.

26. A bearing remaining life diagnosis method comprising:

calculating, when an actually-measured peeling length, which is an actually measured value of a peeling length of the bearing ring, is acquired, a remaining life of the bearing based on the actually-measured peeling length and prediction of an operation status of the rotary machine; and
performing, when the actually-measured peeling length is not acquired, the bearing remaining life diagnosis method according to claim 1.

27. A bearing remaining life diagnosis device for predicting a remaining life of a rolling bearing used in a rotary machine and having inner and outer bearing rings and rolling elements between both the bearing rings, the bearing remaining life diagnosis device comprising:

a peeling length acquisition unit configured to calculate an estimated peeling length which is an estimated value of a peeling length of the bearing ring; and
a remaining life calculation unit configured to calculate the remaining life of the bearing based on the estimated peeling length of the bearing ring and prediction of an operation status of the rotary machine, wherein
the peeling length acquisition unit includes
a maximum rolling element load calculation unit configured to calculate a maximum rolling element load from actually measured data,
a maximum contact surface pressure calculation unit configured to calculate a maximum contact surface pressure from the maximum rolling element load, and
an estimated peeling length calculation unit configured to calculate the estimated peeling length of the bearing ring from the maximum contact surface pressure of the bearing ring.

# FIG.1

EP 4 722 681 A1

# FIG.2

# FIG.3

# FIG.4

200

**BEARING REMAINING LIFE DIAGNOSIS DEVICE**

210
**INPUT UNIT**

220
**OUTPUT UNIT**

230
**STORAGE UNIT**

240
**COMMUNICATION UNIT**

250
**CONTROL UNIT**

251
PEELING LENGTH ACQUISITION UNIT

252
MAXIMUM ROLLING ELEMENT LOAD CALCULATION UNIT

253
MAXIMUM CONTACT SURFACE PRESSURE CALCULATION UNIT

254
ESTIMATED PEELING LENGTH CALCULATION UNIT

255
REMAINING LIFE CALCULATION UNIT

## FIG.5

START

S10
DOES PARAMETER RELATED TO BEARING DETERIORATION FALL WITHIN PREDETERMINED RANGE?

YES

NO

S21
IS THERE ACTUALLY-MEASURED INITIAL PEELING LENGTH DATA?

NO

S22
DETERMINE ESTIMATED INITIAL PEELING LENGTH

YES

S31
IS PEELING LENGTH LESS THAN THRESHOLD VALUE?

NO

YES

S32
CALCULATE REMAINING LIFE

S40
HAS PREDETERMINED PERIOD ELAPSED FROM PREVIOUS REMAINING LIFE CALCULATION?

NO

YES

S51
IS THERE ACTUALLY-MEASURED PEELING LENGTH DATA?

NO

S52
CALCULATE MAXIMUM ROLLING ELEMENT LOAD

S53
CALCULATE MAXIMUM CONTACT SURFACE PRESSURE

S54
CALCULATE ESTIMATED PEELING LENGTH

YES

S61
IS PEELING LENGTH LESS THAN THRESHOLD VALUE?

YES

S62
CALCULATE REMAINING LIFE

NO

END

24

# FIG.6

# FIG.7

# FIG.8

# FIG.9

# FIG.10

# FIG.11

## FIG.12

OPERATING TIME AFTER PEELING OCCURS[hr]

## FIG.13

# FIG.14

ROLLING ELEMENT LOAD FOR EACH SENSOR INSTALLATION POINT $Q_i[N]$

$Q_1$

$Q_2$

$Q_3$

MEAS-URED VALUE OF SENSOR 11c

MEAS-URED VALUE OF SENSOR 11b

MEAS-URED VALUE OF SENSOR 11a

PHYSICAL QUANTITIES MEASURED BY SENSORS
(VIBRATION, DISPLACEMENT, STRAIN)

# FIG.15

# FIG.16

MEASURED VALUE OF WIND DIRECTION/ANEMOMETER

WIND SPEED[m/s]

# FIG.17

MEASURED VALUE

PHYSICAL QUANTITIES RELATED TO VIBRATION DATA
(ACCELERATION, SPEED)

# FIG.18

# FIG.19

# FIG.20

## INTERNATIONAL SEARCH REPORT

| International application No. |
|---|
| **PCT/JP2024/015375** |

**A. CLASSIFICATION OF SUBJECT MATTER**

*G01M 13/04*(2019.01)i
FI: G01M13/04

According to International Patent Classification (IPC) or to both national classification and IPC

**B. FIELDS SEARCHED**

Minimum documentation searched (classification system followed by classification symbols)

G01M13/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-074060 A (NSK LTD.) 16 May 2019 (2019-05-16) paragraphs [0037]-[0056], [0084] | 1-14, 16, 24-27 |
| A | | 15, 17-23 |
| Y | JP 2020-143947 A (NTN CORP.) 10 September 2020 (2020-09-10) paragraphs [0041]-[0061], [0078]-[0099], [0109]-[0119] | 1-14, 16, 24-27 |
| A | | 15, 17-23 |
| Y | WO 2020/171142 A1 (NSK LTD.) 27 August 2020 (2020-08-27) paragraphs [0020]-[0035] | 1-14, 16, 24-27 |
| A | | 15, 17-23 |
| Y | JP 2002-148148 A (NSK LTD.) 22 May 2002 (2002-05-22) paragraphs [0072]-[0074] | 7-10, 16 |
| A | WO 2021/117752 A1 (NTN CORP.) 17 June 2021 (2021-06-17) paragraphs [0013]-[0070] | 1-27 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 June 2024** | **02 July 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

International application No.

**PCT/JP2024/015375**

**C. DOCUMENTS CONSIDERED TO BE RELEVANT**

| Category* | Citation of document, with indication, where appropriate, of the relevant passages | Relevant to claim No. |
|---|---|---|
| A | US 2023/0112604 A1 (SIEMENS AKTIENGESELLSCHAFT) 13 April 2023 (2023-04-13) paragraphs [0032]-[0044] | 1-27 |

Form PCT/ISA/210 (second sheet) (July 2022)

**INTERNATIONAL SEARCH REPORT**
Information on patent family members

International application No.

**PCT/JP2024/015375**

| Patent document cited in search report | | | Publication date (day/month/year) | Patent family member(s) | | | Publication date (day/month/year) |
|---|---|---|---|---|---|---|---|
| JP | 2019-074060 | A | 16 May 2019 | (Family: none) | | | |
| JP | 2020-143947 | A | 10 September 2020 | (Family: none) | | | |
| WO | 2020/171142 | A1 | 27 August 2020 | US paragraphs [0050]-[0067] JP | 2022/0042879 2021-103170 | A1 A | |
| JP | 2002-148148 | A | 22 May 2002 | US paragraphs [0132]-[0133] EP | 2002/0046012 1184813 | A1 A2 | |
| WO | 2021/117752 | A1 | 17 June 2021 | JP | 2021-92455 | A | |
| US | 2023/0112604 | A1 | 13 April 2023 | WO EP CN | 2021/148170 3855153 115023598 | A1 A1 A | |

Form PCT/ISA/210 (patent family annex) (July 2022)

38

**EP 4 722 681 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6844764 B

**Non-patent literature cited in the description**

- Tek Tidskr. Mek., 1933, vol. h